# EUROPÄISCHE PATENTSCHRIFT

(11) **EP 0 623 445 B1**
(45) Veröffentlichungstag und Bekanntmachung des Hinweises auf die Patenterteilung: **07.01.1998**
(21) Anmeldenummer: 94106266.3
(22) Anmeldetag: 22.04.1994
(51) Int. Cl.: B29C 45/18

(54) **Spritzeinheit an Spritzgiessmaschinen zur Herstellung thermoplastischer Kunststoffteile**
Injection unit for injection moulding machines for producing thermoplastic articles
Unité d'injection pour des machines à mouler par injection pour fabriquer des articles en matière thermoplastique

(30) Priorität: 06.05.1993 DE 4314941
(43) Veröffentlichungstag der Anmeldung: 09.11.1994
(73) Patentinhaber: KLÖCKNER DESMA SCHUHMASCHINEN GmbH, 28832 Achim (DE)
(72) Erfinder: Drewinski,Hubert, D-27299 Langwedel (DE)
(74) Vertreter: Röther, Peter, Dipl.-Phys.

(56) Entgegenhaltungen:
- WO-A-92/10352
- DE-A- 1 704 754
- DE-A- 2 363 503
- GB-A- 1 101 757
- US-A- 4 135 870
- PATENT ABSTRACTS OF JAPAN vol. 3, no. 23 (C-38) 26. Februar 1979 & JP-A-53 147 757 (TOYOTA JIDOSHA KOGYO)
- PLASTVERARBEITER, Bd.21, Nr.5, Mai 1970, SPEYER/RHEIN DE Seite III-1, Seiten III-8 und III-9 MENGES 'Vernetzbarkeit thermoplastischer Schmelzen beim Spritzgiessen'
- PATENT ABSTRACTS OF JAPAN vol. 8, no. 207 (M-327) (1644) 21. September 1984 & JP-A-59 096 932 (SHARP)

## Beschreibung

Die Erfindung betrifft eine Spritzeinheit an Spritzgießmaschinen zur Herstellung thermoplastischer Kunststoffteile gemäß dem Oberbegriff des Patentanspruchs 1.

Um derartige Kunststoffteile beliebiger Farbe herzustellen, sind im Stand der Technik mehrere Verfahren bekannt.

Entweder wird der Spritzeinheit über den Einzugsschacht direkt farbiges Granulat zugeführt, das durch die Plastifizierschnecke und durch zugeführte Wärme in einen spritzfähigen Zustand gebracht wird. Oder es wird farblosem Granulat ein weiteres farbiges Granulat zugefügt, um die gewünschte Farbnuance zu erhalten.

Es ist aber auch bekannt, farblosem Granulat, das durch den Einzugsschacht in den Plastifizierzylinder eingebracht worden ist, die gewünschte Farbe in flüssigem Zustand zuzuleiten, und zwar noch bevor die Schnecke mit der Plastifizierung des Granulates begonnen hat.

Nachteilig bei all diesen bekannten Verfahren ist die Tatsache, daß bei einem Farbwechsel zunächst der Plastifizierzylinder und die Schnecke sorgfältig gereinigt werden müssen. Das nimmt zum einen viel Zeit in Anspruch, wodurch die Produktion unterbrochen wird, zum anderen fällt nicht mehr direkt nutzbares plastifiziertes Material an, das in der Menge dem gesamten Rauminhalt der Spritzeinheit entspricht. Zur weiteren Verwendung muß das anfallende Material zunächst wieder granuliert werden, und, da es bereits eingefärbt ist, kann es nicht mehr universell eingesetzt werden.

Daher ist im Stand der Technik (JP-A-53,147,757) eine Vorrichtung der eingangs genannten Art vorgeschlagen worden, bei der die Farbe mittels einer Hochdruckpumpe in das bereits plastifizierte, farblose Kunststoffmaterial zwischen Schneckenspitze und dem anschließenden Mischer eingespritzt wird. Bei dieser Vorrichtung ist eine Hochdruckpumpe notwendig, da die Farbe gegen einen Einspritzdruck in die Kunststoffmasse eingespritzt werden muß, der im Bereich zwischen 150 und 600 bar liegt. Damit der Farbeinspritzvorgang zeitlich und mengenmäßig exakt verlaufen kann, muß die Hochdruckpumpe mit einer entsprechenden aufwendigen Steuerung versehen sein. Darüber hinaus benötigt die Hochdruckpumpe zusätzliche Fremdenergie und ist wartungsintensiv. Ferner ist bei Ausfall der Pumpe der gesamte Produktionsprozeß lahmgelegt.

Der Erfindung liegt daher die Aufgabe zugrunde, eine Spritzeinheit der eingangs genannten Art so auszubilden, daß ein schnellerer Farbwechsel ermöglicht wird, wobei die Menge des anfallenden, nicht mehr ohne weiteres nutzbaren gefärbten Kunststoffs möglichst klein gehalten wird und bereits nach dem Farbeinspritzen in den plastifizierten Massestrom eine gute Verteilung der Farbe in der Kunststoffmasse gewährleistet ist.

Die Erfindung löst diese Aufgabe dadurch, daß in die Farbzuleitung ein Farbdosierzylinder integriert ist, und die Bewegung des Dosierkolbens mit der axialen Bewegung der Plastifizier- und Einspritzschneckle über ein Hebelgetriebe gekoppelt ist, wobei der Kopplungsgrad einstellbar ist, und daß in der Düsenkammer ein Massestromteiler angeordnet ist, in dessen Strömungsschatten die zudosierte Farbe eingebracht wird.

Weitere vorteilhafte Ausgestaltungen der Erfindung sind Gegenstand der Unteransprüche.

Die Vorteile der erfindungsgemäßen Vorrichtung ergeben sich aus der folgenden Funktionsbeschreibung:

Der Spritzeinheit wird durch den Einzugsschacht farbloses PVC-Granulat zugeführt. Durch die Rotationsbewegung der Plastifizierschnecke und durch zugeführte Wärmeenergie wird das Granulat plastifiziert und durch den Schneckengang vor die Spitze der Plastifizierschnecke transportiert. Ein Absperrelement in der Einspritzdüse verhindert, daß das plastifizierte Material bereits austritt. Im Verlaufe des Plastifizierens bewegt sich die Plastifizierschnecke dadurch, daß immer mehr Material vor die Schneckenspitze transportiert wird, von der Austrittsöffnung weg; so lange, bis die für den Einspritzvorgang erforderliche Menge an plastifiziertem Material im Schneckenzylinder vorhanden ist.

Dadurch, daß die Kolbenstange des Farbdosierzylinders mechanisch mit der Plastifizierschnecke verbunden ist, wird der Kolben des Farbdosierzylinders bei der Rückwärtsbewegung der Plastifizierschnecke ebenfalls zurückgezogen. Dabei wird aus dem Farbbehälter flüssige Farbe in den Zylinderraum des Farbdosierzylinders eingesaugt.

Nach Beendigung des Plastifiziervorganges wird die Plastifizierschnecke in Richtung Austrittsöffnung bewegt, wobei sie als Einspritzkolben dient. Hierbei ist das Absperrorgan in der Düse geöffnet, das plastifizierte Material gelangt durch die Austrittsöffnung in den Düsenkanal. Gleichzeitig wird durch die Einspritzbewegung der Plastifizierschnecke auch der Kolben im Farbdosierzylinder nach vorn bewegt, wodurch die im Zylinderraum angesammelte Farbe über die Farbzuleitung in den Düsenkanal, und zwar direkt in den Massestrom, eingespritzt wird. Die mit der Farbe versehene Kunststoffmasse wird schließlich durch einen Mischer geleitet, bevor die eingefärbte Kunststoffmasse über die Einspritzöffnung in die Kavität der Spritzgießform eingespritzt wird.

Durch die erfindungsgemäße Vorrichtung ist es möglich, jeweils nur die für einen Schuß benötigte Farbmenge erst dann zuzuführen, wenn das farblose Granulat bereits plastifiziert durch die Düsenkammer gedrückt wird. Bei einem Farbwechsel braucht somit nur die relativ kleine Düsenkammer gereinigt zu werden. Hierzu genügen in der Regel zwei Einspritzvorgänge mit der gewünschten neuen Farbe, so daß der Produktionsablauf nur unwesentlich gestört wird.

Neben dem Vorteil des schnellen Farbwechsels und der geringen Reinigungszeit bringt die Erfindung auch einen entscheidenden Lagervorteil mit sich, da lediglich farbloses Granulat und die entsprechenden Farben auf Lager gehalten zu werden brauchen.

Um den eigentlichen Mischvorgang optimal vorbereiten zu können, ist in der Düsenkammer im Mündungsbereich der Farbzuleitung ein Massestromteiler angeordnet, in dessen Strömungsschatten die zudosierte Farbe einbringbar ist. Das ist deshalb von Wichtigkeit, weil die Farbe gegen einen Einspritzdruck von ca. 150 bis 600 bar in die plastifizierte Masse eingespritzt werden muß. Somit nimmt der hinter dem Massestromteiler wieder zusammengeführte Massestrom die eingespritzte Farbe schon in recht guter Verteilung mit, wodurch sich das anschließende Mischen vereinfacht.

Obwohl es denkbar ist, daß die Kolbenstange des Farbdosierzylinders direkt mit dem Schaft der Einspritzschnecke verbunden ist, ist jedoch erfindungsgemäß vorgesehen, daß die Kolbenstange des Farbdosierzylinders und der Schaft der Einspritzschnecke über ein Hebelgetriebe miteinander gekoppelt sind, wobei der Kopplungsgrad einstellbar ist. Hierdurch ist es möglich, auf schnelle und einfache Weise den Hub des Kolbens des Farbdosierzylinders zu verstellen und damit die Menge der einzuspritzenden Farbe zu regeln.

Gemäß Anspruch 2 ist der Massestromteiler kegelförmig ausgebildet, wodurch sich gute Strömungsverhältnisse ergeben, da die Spitze des Kegels in Richtung Einspritzschnecke liegt. Die Mündungsöffnung der Farbzuleitung liegt dabei im Kegelmantel. Somit ist gewährleistet, daß die Farbe in einen massefreien Raum gelangt und anschließend von dem Massestrom umhüllt wird.

Der anschließende Mischer ist bevorzugt gemäß Anspruch 3 ein Statikmischer, was den Vorteil hat, daß keine verschleißanfälligen bewegbaren Teile existieren. Eventuell können auch mehrere Statikmischer hintereinander angeordnet sein.

Um beim Zurückbewegen der Einspritzschnecke und der damit gekoppelten Zurückbewegung des Kolbens des Farbdosierzylinders das Ansaugen der aus dem Farbbehälter fließenden Farbe zu unterstützen, ist gemäß Anspruch 4 der Farbbehälter mit Druckluft beaufschlagt. Der Überdruck im Farbbehälter kann beispielsweise 2 bis 3 bar betragen.

Um zu verhindern, daß beim Einspritzvorgang Farbe aus dem Farbdosierzylinder in den Farbbehälter zurückströmen kann, ist in der Farbzuleitung vom Farbbehälter zum Farbdosierzylinder ein Sperrelement, z. B. in Form eines Rückschlagventils, angeordnet. Ein gleichartiges Sperrelement ist in der Farbzuleitung dort angeordnet, wo die Farbzuleitung in die Düsenkammer mündet, um zu verhindern, daß beim Einspritzvorgang plastifiziertes Kunststoffmaterial in die Farbzuleitung eindringen kann, wodurch diese verstopft würde.

Durch die Merkmale des Anspruchs 6 ist es möglich, die Düsenkammer, die gleichzeitig Mischkammer ist, als modulares Bauteil zu realisieren, welches auf einfache Weise - entweder durch eine Flanschverbindung oder durch eine Schraubverbindung - auch an bereits vorhandene Einspritzaggregate anzuschließen ist.

Dadurch, daß das Düsen- und Mischmodul schnell vom Aggregat getrennt werden kann, ist die Wartung und die Reinigung des gesamten Einspritzaggregats, aber auch des Moduls selbst, unkompliziert und wenig zeitaufwendig.

Die Erfindung wird im folgenden anhand einer Zeichnung dargestellt und näher erläutert.

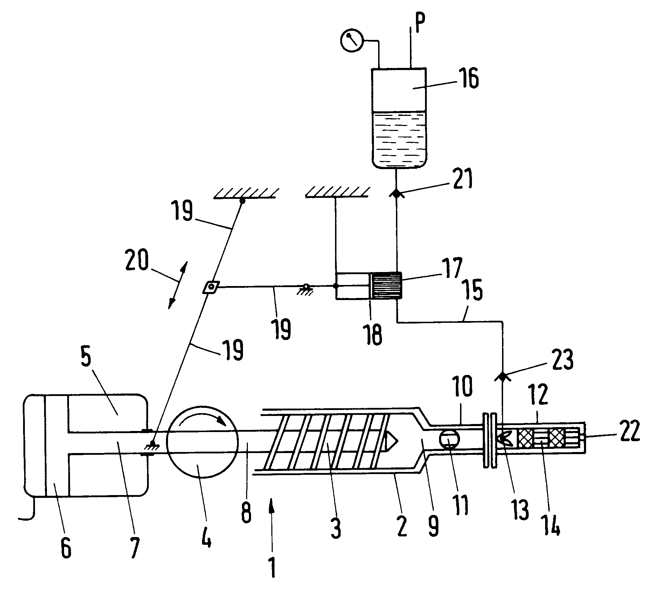

In der einzigen Figur ist die Spritzeinheit allgemein mit dem Bezugszeichen 1 versehen. Sie besteht aus einem Plastifizierzylinder 2 und einer darin axial bewegbaren und rotierbaren Plastifizier- und Einspritzschnecke 3. Der Antrieb für die Rotationsbewegung ist lediglich symbolisch dargestellt und mit dem Bezugszeichen 4 versehen.

In der Verlängerung der Einspritzschneckenachse befindet sich ein hydraulisch betätigter Einspritzzylinder 5, dessen Kolben 6 über die Kolbenstange 7 mit dem Schaft 8 der Plastifizierschnecke 3 verbunden ist. In Spritzrichtung verjüngt sich der Plastifizierzylinder 2 zur Austrittsöffnung 9, an die sich der Einspritzdüsenkanal 10 anschließt. In dem Düsenkanal 10 befindet sich ein Absperrelement 11, im dargestellten Ausführungsbeispiel ein Drehschieber. An den Düsenkanal 10 angeflanscht ist ein Düsenmundstück 12, in dem in Einspritzrichtung hintereinander zunächst ein kegelförmiger Massestromteiler 13 und ein Mischer 14 angeordnet sind. Der Mischer 14 besteht im vorliegenden Ausführungsbeispiel aus zwei hintereinander angeordneten Statikmischern. Der Düsenkanal 10 und das Düsenmundstück 12 bilden zusammen die Düsenkammer. In die Düsenkammer mündet im Bereich des Massestromteilers 13 eine Farbzuleitung 15, die die Düsenkammer mit einem Farbbehälter 16 verbindet. In die Farbzuleitung 15 integriert ist ein Farbdosierzylinder 17, welcher ortsfest angeordnet ist. Die am Kolben 18 angreifende Kolbenstange ist über ein Hebelgetriebe 19 mit dem Schaft 8 bzw. der Kolbenstange 7 der Plastifizierschnecke 3 gekoppelt. Der Doppelpfeil 20 am Hebelgetriebe 19 deutet an, daß durch Veränderung der Hebelverhältnisse der Kopplungsgrad zwischen dem Kolben 18 des Farbdosierzylinders 17 und der Plastifizierschnecke 3 einstellbar ist.

Die Farbzuleitung 15 ist durch den Kegelmantel des Massestromteilers 13 hindurchgeführt, so daß die eingespritzte Farbe in den Bereich des Strömungsschattens des Massestromteilers gelangt.

Der Spritzeinheit 1 wird durch eine nicht dargestellte Einrichtung farbloses PVC-Granulat zugeführt. Im Plastifizierzylinder 2 wird das Granulat durch Zuführen von Wärme und durch Kneten der rotierenden Plastifizierschnecke 3 in einen spritzfähigen Zustand versetzt. Diese Masse wird zur Austrittsseite gefördert, wobei die Schnecke im Plastifizierzylinder von der Austrittsöffnung 9 wegwandert. In dem entstehenden Raum sammelt sich die plastifizierte Masse. Dabei wird der mit einem Druck von etwa 20 bis 30 bar beaufschlagte Kolben 6 des Einspritzzylinders 5 gegen diesen Druck ebenfalls nach hinten bewegt.

Parallel zur Bewegung der Plastifizierschnecke 3 wird der Kolben 18 des Farbdosierzylinders 17 über das Hebelgetriebe 19 ebenfalls nach hinten bewegt. Dabei wird über die Farbzuleitung 15 Farbe aus dem mit einem Druck von etwa 2 bis 3 bar beaufschlagten Farbbehälter 16 in den Zylinderraum des Dosierzylinders 17 angesaugt. Bis zu diesem Zeitpunkt, wenn also sowohl die Plastifizierschnecke 3 als auch der Kolben 18 des Farbdosierzylinders 17 in ihre hinteren Stellungen gelangt sind, verschließt der Drehschieber 11 die Austrittsöffnung des Plastifizierzylinders 2.

Zum Einspritzen der Masse wird die Spritzeinheit 1 gegen die geschlossene Form der Spritzgießmaschine gefahren, die versperrte Austrittsöffnung 9 geöffnet und der Kolben 6 des Einspritzzylinders 5 mit Druck beaufschlagt. Der Druck beträgt etwa 120 bar. Hierdurch wird die Plastifizierschnecke 3 gegen die Austrittsöffnung 9 bewegt, nachdem der Drehschieber 11 geöffnet wurde. Die plastifizierte Masse wird mit Hilfe der Plastifizierschnecke 3 durch den Düsenkanal 10 in das Düsenmundstück 12 gedrückt. Gleichzeitig wird der Kolben 18 des Farbdosierzylinders 17 über das Hebelgetriebe 19 ebenfalls nach vorn bewegt, wodurch die Farbe aus dem Zylinderraum des Farbdosierzylinders 17 in die Farbzuleitung 15 gedrückt wird. Das Rückschlagventil 21 verhindert, daß die Farbe wieder zurück in den Farbbehälter gelangt. Die Farbe wird statt dessen gezielt in den Strömungsschatten des kegelförmigen Massestromteilers 13 gespritzt und anschließend von dem Massestrom umschlossen, wonach die die Farbe mitführende Kunststoffmasse durch den Statikmischer 14, in dem eine intensive Mischung von Kunststoffmasse und Farbe stattfindet, durch die Düsenöffnung 22 in die nicht dargestellte Kavität einer Spritzgießform eingespritzt wird. Das Rückschlagventil 23 verhindert, daß plastifiziertes Kunststoffmaterial in die Farbzuleitung eindringen kann und diese verstopfen kann. Die Anordnung des Rückschlagventils 23 ist in der Zeichnung nur schematisch wiedergegeben. In der Praxis befindet sich das Rückschlagventil 23 direkt am Düsenmundstück 12.

## Patentansprüche

1. Spritzeinheit an Spritzgießmaschinen zur Herstellung thermoplastischer Kunststoffteile, wobei die Spritzeinheit (1) einen Plastifizier- und Einspritzzylinder (2), eine darin rotierbar und axial verschiebbar angeordnete Plastifizier- und Einspritzschnecke (3) sowie eine Farbdosiereinrichtung (17) mit mindestens einem Farbbehälter (16) aufweist, der über eine Farbzuleitung (15) mit der Spritzeinheit (1) verbunden ist, die in der Einspritzdüse (10,12) in den plastifizierten Massestrom mündet, und hinter der Einmündung der Farbzuleitung (15) ein Mischer (14) angeordnet ist,
dadurch gekennzeichnet,
daß in die Farbzuleitung (15) ein Farbdosierzylinder (17) integriert ist, und die Bewegung des Dosierkolbens (18) mit der axialen Bewegung der Plastifizier- und Einspritzschnecke (3) über ein Hebelgetriebe (19) gekoppelt ist, wobei der Kopplungsgrad einstellbar ist, und daß in der Düsenkammer (12) ein Massestromteiler (13) angeordnet ist, in dessen Strömungsschatten die zudosierte Farbe eingebracht wird.

2. Spritzeinheit nach Anspruch 2,
dadurch gekennzeichnet,
daß der Massestromteiler (13) kegelförmig ausgebildet ist, wobei die Spitze des Kegels in Richtung der Plastifizierschnecke (3) zeigt.

3. Spritzeinheit nach Ansprüche 1 oder 2,
dadurch gekennzeichnet,
daß der Mischer (14) ein Statikmischer ist.

4. Spritzeinheit nach einem der Ansprüche 1 bis 3,
dadurch gekennzeichnet,
daß der/die Farbbehälter (16) mit Druckluft beaufschlagbar ist/sind.

5. Spritzeinheit nach einem der Ansprüche 1 bis 4,
dadurch gekennzeichnet,
daß zwischen der Mündung der Farbzuleitung (15) und dem Farbdosierzylinder (17) und zwischen dem Farbdosierzylinder (17) und dem Farbbehälter (16) je ein Rückschlagventil (21, 23) angeordnet ist.

6. Spritzeinheit nach einem der Ansprüche 1 bis 5,
dadurch gekennzeichnet,
daß der Massestromteiler (13) und der Mischer (14) in einem rohrförmigen Gehäuse (12) angeordnet sind, das an die Austrittsöffnung (19) anschließbar ist.

## Claims

1. Injection unit on injection moulding machines for producing thermoplastic mouldings wherein the injection unit (1) comprises a plasticising and injection cylinder (2), a plasticising and injection screw (3) arranged rotatably and axially displaceably therein and a colorant metering device (17) with at least one colorant container (16) connected via a colorant supply line (15) to the injection unit (1) which opens into the plasticised mass flow in the injection nozzle (10, 12), and a mixer (14) is arranged downstream of the inlet of the colorant supply line (15), characterised in that a colorant metering cylinder (17) is integrated into the colorant supply line (15) and the movement of the metering piston (18) is coupled to the axial movement of the plasticising and injection screw (3) via a lever mechanism (19), the degree of coupling being adjustable, and in that in the nozzle chamber (12) there is arranged a mass flow divider (13) in whose flow shadow the added colorant is introduced.

2. Injection unit according to claim 2, characterised in that the mass flow divider (13) is conical in design, the tip of the cone pointing in the direction of the plasticising screw (3).

3. Injection unit according to claim 1 or 2, characterised in that the mixer (14) is a static mixer.

4. Injection unit according to one of claims 1 to 3, characterised in that the colorant container(s) (16) can be acted upon by compressed air.

5. Injection unit according to one of claims 1 to 4, characterised in that a respective nonreturn valve (21, 23) is arranged between the inlet of the colorant supply line (15) and the colorant metering cylinder (17) and between the colorant metering cylinder (17) and the colorant container (16).

6. Injection unit according to one of claims 1 to 5, characterised in that the mass flow divider (13) and the mixer (14) are arranged in a tubular housing (12) which can be connected to the outlet orifice (19).

## Revendications

1. Unité d'injection sur des machines de moulage par injection pour la fabrication de pièces en matière thermoplastique, l'unité d'injection (1) comportant un cylindre de plastification et d'injection (2), une vis sans fin de plastification et d'injection (3) disposée à l'intérieur de celui-ci avec une possibilité de rotation et de translation axiale, ainsi qu'un dispositif de dosage de colorant (17) avec au moins un réservoir de colorant (16) relié à unité d'injection (1) par une conduite d'alimentation en colorant (15) qui, dans la buse d'injection (10, 12), débouche dans le flux de matière plastifiée, un mélangeur (14) étant disposé en aval de l'orifice débouchant de la conduite d'alimentation en colorant (15), caractérisée en ce qu'un cylindre de dosage de colorant (17) est implanté sur la conduite d'alimentation en colorant (15), et le déplacement du piston doseur (18) est couplé au déplacement axial de la vis sans fin de plastification et d'injection (3) par l'intermédiaire d'un mécanisme à leviers (19), le degré de couplage étant réglable, et en ce que, dans la chambre de buse (12), est disposé un diviseur de flux de matière (13) dans le sillage duquel est introduit le colorant dosé.

2. Unité d'injection selon la revendication 2, caractérisée en ce que le diviseur de flux de matière (13) est de forme conique, le sommet du cône étant orienté en direction de la vis sans fin de plastification (3).

3. Unité d'injection selon les revendications 1 ou 2, caractérisée en ce que le mélangeur (14) est un mélangeur statique.

4. Unité d'injection selon l'une des revendications 1 à 3, caractérisée en ce que le/les réservoir(s) de colorant (16) peut/peuvent être alimenté(s) en air comprimé.

5. Unité d'injection selon l'une des revendications 1 à 4, caractérisée en ce qu'un clapet anti-retour (21, 23) est implanté respectivement entre l'orifice débouchant de la conduite d'alimentation en colorant (15) et le cylindre de dosage de colorant (17) et entre le cylindre de dosage de colorant (17) et le réservoir de colorant (16).

6. Unité d'injection selon l'une des revendications 1 à 5, caractérisée en ce que le diviseur de flux de matière (13) et le mélangeur (14) sont disposés dans un boîtier tubulaire (12) qui peut être relié à l'orifice de sortie (19).
